# EUROPEAN PATENT APPLICATION

(11) **EP 3 190 856 A2**
(43) Date of publication of application: **12.07.2017**
(21) Application number: 15844843.1
(22) Date of filing: 28.09.2015
(51) Int. Cl.: H04W 84/02, H04L 29/12, H04W 12/06, H04W 12/02

(54) **COMMUNICATIONS METHOD, DEVICE, AND SYSTEM**

(30) Priority: 28.09.2014 CN 201410510530
(71) Applicant: Huawei Technologies Co., Ltd., Longgang District Shenzhen, Guangdong 518129 (CN)
(72) Inventor: PANG, Gaokun, Shenzhen Guangdong 518129 (CN); DING, Zhiming, Shenzhen Guangdong 518129 (CN); FANG, Ping, Shenzhen Guangdong 518129 (CN)
(74) Representative: Epping - Hermann - Fischer
(86) International application number: PCT/CN2015/090868
(87) International publication number: WO 2016/045635

(57) **Abstract**

Embodiments of the present invention provide a communication method, apparatus, and system, and relate to the communications field, so that both a communication address of an access point and a communication address of a station can be changed, thereby preventing user information disclosure and improving network security. The method includes: sending, by an access point, first communication address change information to a station, where the first communication address change information is used to notify the station of a communication address which is to be used by the access point after the access point changes a communication address, the first communication address change information includes at least a third communication address, and the third communication address is the communication address which is to be used by the access point after the access point changes the communication address; determining, by the access point, a fourth communication address, where the fourth communication address is a communication address which is to be used by the station after the station changes a communication address; and switching, by the access point, the communication address from a first communication address to the third communication address, and using the third communication address to communicate with the station whose communication address is switched from a second communication address to the fourth communication address.

## Description

This application claims priority to Chinese Patent Application No. 201410510530.0, filed with the Chinese Patent Office on September 28, 2014, which is incorporated herein by reference in its entirety.

### TECHNICAL FIELD

The present invention relates to the communications field, and in particular, to a communication method, apparatus, and system.

### BACKGROUND

With continuous development of the society, to meet people's requirements for mobile office, a Wi-Fi (Wireless Fidelity, wireless fidelity) technology appears, and quickly becomes an indispensable part of people's life because of advantages such as a high transmission rate, and easy to manage. Generally, a Wi-Fi network includes an AP (Access Point, access point) and an STA (Station, station). The AP provides an access service for the STA, and the STA accesses the network by using the AP to exchange data with another device in the network.

Actually, to enable the STA to identify different APs so as to access a specific network, a MAC (Medium Access Control, medium access control layer) address is set for each AP for distinction. Generally, MAC addresses are classified into two types: a globally unique address that has already been set in an AP production process, and a changeable temporary local address. In a process of data exchange between the AP and the STA, a globally unique address is used as a MAC address of the AP, and therefore, the MAC address of the AP is fixed. In this way, a particular security threat exists in the process of data exchange between the AP and the STA. For example, because the MAC address of the AP is always carried in exchanged data, an eavesdropper may obtain information about the AP by tracing the MAC address of the AP, and further trace, according to the information about the AP, the STA that exchanges data with the AP, which causes disclosure of information such as privacy of a user who uses the STA.

To resolve the foregoing problem, in the prior art, tracing is prevented generally in a manner in which an STA aperiodically changes a MAC address of the STA, so as to implement a function of protecting user privacy and improving network security. However, because a MAC address of an AP is fixed in the prior art, an eavesdropper may predict a changed MAC address of the STA according to the fixed MAC address of the AP, to indirectly obtain information about the STA and subsequently trace the STA.

### SUMMARY

Embodiments of the present invention provide a communication method, apparatus, and system, so that both a communication address of an access point and a communication address of a station can be changed, thereby preventing user information disclosure and improving network security.

To achieve the foregoing objective, the following technical solutions are adopted in the embodiments of the present invention.

A first aspect of the present invention provides a communication method, where an access point uses a first communication address to communicate with a station that uses a second communication address, the first communication address is a communication address used by the access point, the second communication address is a communication address used by the station, and the method includes:
sending, by the access point, first communication address change information to the station, where the first communication address change information is used to notify the station of a communication address which is to be used by the access point after the access point changes the communication address, the first communication address change information includes at least a third communication address, and the third communication address is the communication address which is to be used by the access point after the access point changes the communication address;
determining, by the access point, a fourth communication address, where the fourth communication address is a communication address which is to be used by the station after the station changes the communication address; and
switching, by the access point, the communication address from the first communication address to the third communication address, and using the third communication address to communicate with the station whose communication address is switched from the second communication address to the fourth communication address.

According to the first aspect, in a first possible implementation manner of the first aspect, the determining, by the access point, a fourth communication address specifically includes:
generating, by the access point, the fourth communication address; or
receiving, by the access point, second communication address change information sent by the station, where the second communication address change information is used to notify the access point of the communication address which is to be used by the station after the station changes the communication address, and the second communication address change information includes at least the fourth communication address.

According to the first aspect or the first possible implementation manner of the first aspect, in a second possible implementation manner of the first aspect, the first communication address change information further includes a preset time period; and
the switching, by the access point, the communication address from the first communication address to the third communication address, and using the third communication address to communicate with the station whose communication address is switched from the second communication address to the fourth communication address specifically includes:
after the preset time period, interrupting, by the access point, communication between the first communication address and the second communication address of the station, switching the communication address from the first communication address to the third communication address, and using the third communication address to communicate with the station whose communication address is switched from the second communication address to the fourth communication address.

According to the first aspect, the first possible implementation manner of the first aspect, or the second possible implementation manner of the first aspect, in a third possible implementation manner of the first aspect, the method further includes:
within the preset time period, using, by the access point, the first communication address to communicate with the station that uses the second communication address.

According to any one of the first aspect or the first possible implementation manner of the first aspect to the third possible implementation manner of the first aspect, in a fourth possible implementation manner of the first aspect, before the sending, by the access point, first communication address change information to the station, the method further includes:
obtaining, by the access point, the third communication address, and encrypting, by the access point, the third communication address according to an encryption algorithm, to generate the first communication address change information; or
obtaining, by the access point, the third communication address and the fourth communication address, and encrypting, by the access point, the third communication address and the fourth communication address according to an encryption algorithm, to generate the first communication address change information.

According to any one of the first aspect or the first possible implementation manner of the first aspect to the fourth possible implementation manner of the first aspect, in a fifth possible implementation manner of the first aspect, before the sending, by the access point, first communication address change information to the station, the method further includes:
receiving, by the access point, a first communication address change instruction sent by the station, where the first communication address change instruction is used to trigger the access point to change the communication address; and/or
sending, by the access point, a second communication address change instruction to the station, where the second communication address change instruction is used to trigger the station to change the communication address.

According to any one of the first aspect or the first possible implementation manner of the first aspect to the fifth possible implementation manner of the first aspect, in a sixth possible implementation manner of the first aspect, there are multiple stations, and
the sending, by the access point, first communication address change information to the station specifically includes:
sending, by the access point, the first communication address change information to all stations after the access point receives a first communication address change instruction sent by one station.

According to any one of the first aspect or the first possible implementation manner of the first aspect to the sixth possible implementation manner of the first aspect, in a seventh possible implementation manner of the first aspect, the switching, by the access point, the communication address from the first communication address to the third communication address, and using the third communication address to communicate with the station whose communication address is switched from the second communication address to the fourth communication address specifically includes:
calculating, by the access point, a first session key according to the third communication address and the fourth communication address; and
if the first session key matches a second session key, switching, by the access point, the communication address from the first communication address to the third communication address, and using the third communication address to communicate with the station whose communication address is switched from the second communication address to the fourth communication address, where the second session key is calculated by the station according to the third communication address and the fourth communication address.

A second aspect of the present invention provides a communication method, where an access point uses a first communication address to communicate with a station that uses a second communication address, the first communication address is a communication address used by the access point, the second communication address is a communication address used by the station, and the method includes:
receiving, by the station, first communication address change information sent by the access point, where the first communication address change information is used to notify the station of a communication address which is to be used by the access point after the access point changes the communication address, the first communication address change information includes at least a third communication address, and the third communication address is the communication address which is to be used by the access point after the access point changes the communication address;
determining, by the station, a fourth communication address, where the fourth communication address is a communication address which is to be used by the station after the station changes the communication address; and
switching, by the station, the communication address from the second communication address to the fourth communication address, and using the fourth communication address to communicate with the access point whose communication address is switched from the first communication address to the third communication address.

According to the second aspect, in a first possible implementation manner of the second aspect, the determining, by the station, a fourth communication address specifically includes:
obtaining, by the station, the fourth communication address according to the first communication address change information, where the first communication address change information further includes the fourth communication address; or
generating, by the station, the fourth communication address.

According to the second aspect or the first possible implementation manner of the second aspect, in a second possible implementation manner of the second aspect, the first communication address change information further includes a preset time period; and
the switching, by the station, the communication address from the second communication address to the fourth communication address, and using the fourth communication address to communicate with the access point whose communication address is switched from the first communication address to the third communication address specifically includes:
after the preset time period, interrupting, by the station, communication between the second communication address and the first communication address of the access point, switching the communication address from the second communication address to the fourth communication address, and using the fourth communication address to communicate with the access point whose communication address is switched from the first communication address to the third communication address.

According to the second aspect, the first possible implementation manner of the second aspect, or the second possible implementation manner of the second aspect, in a third possible implementation manner of the second aspect, the method further includes:
within the preset time period, using, by the station, the second communication address to communicate with the access point that uses the first communication address.

According to any one of the second aspect or the first possible implementation manner of the second aspect to the third possible implementation manner of the second aspect, in a fourth possible implementation manner of the second aspect, before the sending, by the station, second communication address change information to the access point, the method further includes:
obtaining, by the station, the fourth communication address, and encrypting, by the station, the fourth communication address according to an encryption algorithm, to generate the second communication address change information.

According to any one of the second aspect or the first possible implementation manner of the second aspect to the fourth possible implementation manner of the second aspect, in a fifth possible implementation manner of the second aspect, before the receiving, by the station, first communication address change information sent by the access point, the method further includes:
sending, by the station, a first communication address change instruction to the access point, where the first communication address change instruction is used to trigger the access point to change the communication address; or
receiving, by the station, a second communication address change instruction sent by the access point, where the second communication address change instruction is used to trigger the station to change the communication address.

According to any one of the second aspect or the first possible implementation manner of the second aspect to the fifth possible implementation manner of the second aspect, in a sixth possible implementation manner of the second aspect, there are multiple stations, and
the receiving, by the station, first communication address change information sent by the access point specifically includes:
after one station sends a first communication address change instruction to the access point, receiving, by the station, the first communication address change information sent by the access point.

According to any one of the second aspect or the first possible implementation manner of the second aspect to the sixth possible implementation manner of the second aspect, in a seventh possible implementation manner of the second aspect, the switching, by the station, the communication address from the second communication address to the fourth communication address, and using the fourth communication address to communicate with the access point whose communication address is switched from the first communication address to the third communication address specifically includes:
calculating, by the station, a second session key according to the third communication address and the fourth communication address; and
if the second session key matches a first session key, switching, by the station, the communication address from the second communication address to the fourth communication address, and using the fourth communication address to communicate with the access point whose communication address is switched from the first communication address to the third communication address, where the first session key is calculated by the access point according to the third communication address and the fourth communication address.

A third aspect of the present invention provides an access point, where the access point uses a first communication address to communicate with a station that uses a second communication address, the first communication address is a communication address used by the access point, the second communication address is a communication address used by the station, and the access point includes:
a sending module, configured to send first communication address change information to the station, where the first communication address change information is used to notify the station of a communication address which is to be used by the access point after the access point changes the communication address, the first communication address change information includes at least a third communication address, and the third communication address is the communication address which is to be used by the access point after the access point changes the communication address;
a determining module, configured to determine a fourth communication address, where the fourth communication address is a communication address which is to be used by the station after the station changes the communication address;
a switching module, configured to switch the communication address from the first communication address to the third communication address; and
a communications module, configured to use the third communication address to communicate with the station whose communication address is switched from the second communication address to the fourth communication address.

According to the third aspect, in a first possible implementation manner of the third aspect, the determining module is specifically configured to: generate the fourth communication address, or
receive second communication address change information sent by the station, where the second communication address change information is used to notify the access point of the communication address which is to be used by the station after the station changes the communication address, and the second communication address change information includes at least the fourth communication address.

According to the third aspect or the first possible implementation manner of the third aspect, in a second possible implementation manner of the third aspect, the first communication address change information further includes a preset time period; and
the switching module is specifically configured to: after the preset time period, interrupt communication between the first communication address and the second communication address of the station, and switch the communication address from the first communication address to the third communication address.

According to the third aspect, the first possible implementation manner of the third aspect, or the second possible implementation manner of the third aspect, in a third possible implementation manner of the third aspect, the communications module is further configured to use, within the preset time period, the first communication address to communicate with the station that uses the second communication address.

According to any one of the third aspect or the first possible implementation manner of the third aspect to the third possible implementation manner of the third aspect, in a fourth possible implementation manner of the third aspect, the access point further includes:
an obtaining module, configured to: before the sending module sends the first communication address change information to the station, obtain the third communication address or obtain the third communication address and the fourth communication address; and
an encryption module, configured to: encrypt the third communication address according to an encryption algorithm, to generate the first communication address change information; or encrypt the third communication address and the fourth communication address according to an encryption algorithm, to generate the first communication address change information.

According to any one of the third aspect or the first possible implementation manner of the third aspect to the fourth possible implementation manner of the third aspect, in a fifth possible implementation manner of the third aspect, the access point further includes:
a receiving module, configured to receive, before the sending module sends the first communication address change information to the station, a first communication address change instruction sent by the station, where the first communication address change instruction is used to trigger the access point to change the communication address; and
the sending module is further configured to send a second communication address change instruction to the station before the sending module sends the first communication address change information to the station, where the second communication address change instruction is used to trigger the station to change the communication address.

According to any one of the third aspect or the first possible implementation manner of the third aspect to the fifth possible implementation manner of the third aspect, in a sixth possible implementation manner of the third aspect, there are multiple stations, and
the sending module is specifically configured to send the first communication address change information to all stations after the receiving module receives a first communication address change instruction sent by one station.

According to any one of the third aspect or the first possible implementation manner of the third aspect to the sixth possible implementation manner of the third aspect, in a seventh possible implementation manner of the third aspect, the switching module specifically includes:
a calculation submodule, configured to calculate a first session key according to the third communication address and the fourth communication address; and
an execution submodule, configured to switch the communication address from the first communication address to the third communication address if the first session key matches a second session key, where the second session key is calculated by the station according to the third communication address and the fourth communication address.

A fourth aspect of the present invention provides a station, where an access point uses a first communication address to communicate with the station that uses a second communication address, the first communication address is a communication address used by the access point, the second communication address is a communication address used by the station, and the station includes:
a receiving module, configured to receive first communication address change information sent by the access point, where the first communication address change information is used to notify the station of a communication address which is to be used by the access point after the access point changes the communication address, the first communication address change information includes at least a third communication address, and the third communication address is the communication address which is to be used by the access point after the access point changes the communication address;
a determining module, configured to determine a fourth communication address, where the fourth communication address is a communication address which is to be used by the station after the station changes the communication address;
a switching module, configured to switch the communication address from the second communication address to the fourth communication address; and
a communications module, configured to use the fourth communication address to communicate with the access point whose communication address is switched from the first communication address to the third communication address.

According to the fourth aspect, in a first possible implementation manner of the fourth aspect, the determining module is specifically configured to obtain the fourth communication address according to the first communication address change information, where the first communication address change information further includes the fourth communication address; or
the determining module is configured to generate the fourth communication address.

According to the fourth aspect or the first possible implementation manner of the fourth aspect, in a second possible implementation manner of the fourth aspect, the first communication address change information further includes a preset time period; and
the switching module is specifically configured to: after the preset time period, interrupt communication between the second communication address and the first communication address of the access point, and switch the communication address from the second communication address to the fourth communication address.

According to the fourth aspect, the first possible implementation manner of the fourth aspect, or the second possible implementation manner of the fourth aspect, in a third possible implementation manner of the fourth aspect, the communications module is further configured to use, within the preset time period, the second communication address to communicate with the access point that uses the first communication address.

According to any one of the fourth aspect or the first possible implementation manner of the fourth aspect to the third possible implementation manner of the fourth aspect, in a fourth possible implementation manner of the fourth aspect, the station further includes:
an encryption module, configured to: after the fourth communication address is determined, encrypt the fourth communication address according to an encryption algorithm, to generate second communication address change information, where the second communication address change information is used to notify the access point of the communication address which is to be used by the station after the station changes the communication address, and the second communication address change information includes at least the fourth communication address.

According to any one of the fourth aspect or the first possible implementation manner of the fourth aspect to the fourth possible implementation manner of the fourth aspect, in a fifth possible implementation manner of the fourth aspect, the station further includes:
a sending module, configured to send a first communication address change instruction to the access point before the receiving module receives the first communication address change information sent by the access point, where the first communication address change instruction is used to trigger the access point to change the communication address; and
the receiving module is further configured to receive, before the receiving module receives the first communication address change information sent by the access point, a second communication address change instruction sent by the access point, where the second communication address change instruction is used to trigger the station to change the communication address.

According to any one of the fourth aspect or the first possible implementation manner of the fourth aspect to the fifth possible implementation manner of the fourth aspect, in a sixth possible implementation manner of the fourth aspect, there are multiple stations, and
the receiving module is specifically configured to receive, after a sending module of one station sends a first communication address change instruction to the access point, the first communication address change information sent by the access point.

According to any one of the fourth aspect or the first possible implementation manner of the fourth aspect to the sixth possible implementation manner of the fourth aspect, in a seventh possible implementation manner of the fourth aspect, the switching module specifically includes:
a calculation submodule, configured to calculate a second session key according to the third communication address and the fourth communication address; and
an execution submodule, configured to switch the communication address from the second communication address to the fourth communication address if the second session key matches a first session key, where the first session key is calculated by the access point according to the third communication address and the fourth communication address.

A fifth aspect of the present invention provides a communications system that includes an access point with any feature described in the third aspect and at least one station with any feature described in the fourth aspect.

According to the communication method, apparatus, and system provided in the embodiments of the present invention, an access point uses a first communication address to communicate with a station that uses a second communication address, where the first communication address is a communication address used by the access point, and the second communication address is a communication address used by the station. The method includes: sending, by the access point, first communication address change information to the station, where the first communication address change information is used to notify the station of a communication address which is to be used by the access point after the access point changes the communication address, the first communication address change information includes at least a third communication address, and the third communication address is the communication address which is to be used by the access point after the access point changes the communication address; determining, by the access point, a fourth communication address, where the fourth communication address is a communication address which is to be used by the station after the station changes the communication address; and switching, by the access point, the communication address from the first communication address to the third communication address, and using the third communication address to communicate with the station whose communication address is switched from the second communication address to the fourth communication address.

Based on descriptions in the foregoing embodiments, in the communication method provided in the embodiments of the present invention, a third communication address of an access point can be associated with a fourth communication address of a station in a process in which the access point uses a first communication address to communicate with the station that uses a second communication address. The third communication address is a communication address which is to be used by the access point after the access point changes a communication address, and the fourth communication address is a communication address which is to be used by the station after the station changes a communication address. Before a preset time period expires, the access point uses the first communication address to communicate with the station that uses the second communication address. After the preset time period expires, both the access point and the station change the communication addresses, and the access point uses the third communication address to communicate with the station whose communication address is switched from the second communication address to the fourth communication address, which resolves a security threat problem brought by a fixed communication address of an access point in the prior art, prevents user information disclosure, and improves network security.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention.
FIG. 1 is a schematic flowchart of a communication method according to Embodiment 1 of the present invention;
FIG. 2 is a schematic flowchart of a communication method according to Embodiment 2 of the present invention;
FIG. 3 is a schematic flowchart of a communication method according to Embodiment 3 of the present invention;
FIG. 4 is a schematic flowchart of a communication method according to Embodiment 4 of the present invention;
FIG. 5 is a schematic flowchart of a communication method according to Embodiment 5 of the present invention;
FIG. 6 is a schematic flowchart of a communication method according to Embodiment 6 of the present invention;
FIG. 7 is a schematic structural diagram of an access point according to Embodiment 7 of the present invention;
FIG. 8 is a schematic structural diagram of an access point according to Embodiment 7 of the present invention;
FIG. 9 is a schematic structural diagram of an access point according to Embodiment 7 of the present invention;
FIG. 10 is a schematic structural diagram of an access point according to Embodiment 7 of the present invention;
FIG. 11 is a schematic structural diagram of a station according to Embodiment 8 of the present invention;
FIG. 12 is a schematic structural diagram of a station according to Embodiment 8 of the present invention;
FIG. 13 is a schematic structural diagram of a station according to Embodiment 8 of the present invention;
FIG. 14 is a schematic structural diagram of a station according to Embodiment 8 of the present invention;
FIG. 15 is a schematic structural diagram of an access point according to Embodiment 9 of the present invention;
FIG. 16 is a schematic structural diagram of an access point according to Embodiment 9 of the present invention;
FIG. 17 is a schematic structural diagram of a station according to Embodiment 10 of the present invention;
FIG. 18 is a schematic structural diagram of a station according to Embodiment 10 of the present invention; and
FIG. 19 is a schematic structural diagram of a communications system according to Embodiment 11 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

It should be noted that an access point is a central node device in a network, and the access point may be an AP (access point, mobile hotspot) in 802.11, or may be a GO (group owner, group owner) in P2P (peer to peer, peer to peer computation), or may be a dock center (dock center) in a Wi-Fi docking (wireless network docking) device. A station may be a device associated with the access point, and the device associated to the access point refers to a device that accesses the network by using the access point. The station may be an STA (station, station) in 802.11, or may be a client (client) in P2P, or may be a peripheral (peripheral) in a Wi-Fi docking device. This is not limited in the present invention.

### Embodiment 1

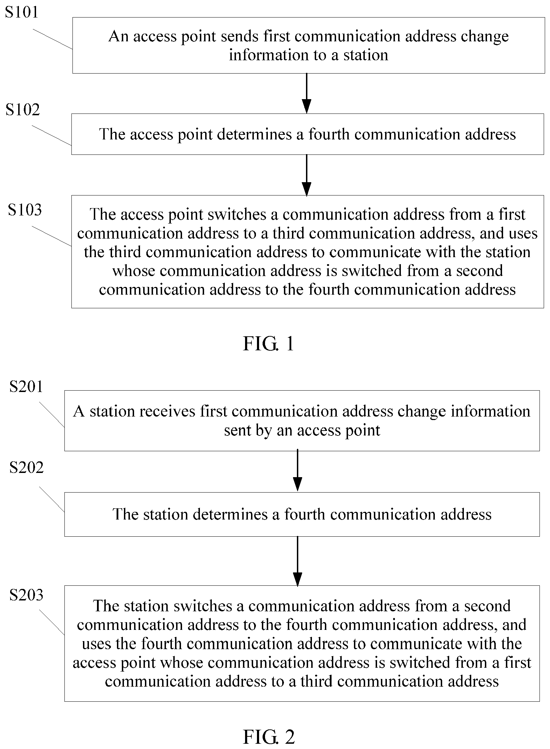

This embodiment of the present invention provides a communication method. An access point uses a first communication address to communicate with a station that uses a second communication address, the first communication address is a communication address used by the access point, and the second communication address is a communication address used by the station. As shown in FIG. 1, the method includes the following steps.

S101. The access point sends first communication address change information to the station.

The first communication address change information is used to notify the station of a communication address which is to be used by the access point after the access point changes the communication address, the first communication address change information includes at least a third communication address, and the third communication address is the communication address which is to be used by the access point after the access point changes the communication address. In this case, the access point may have changed the communication address, or prepare to change the communication address after a preset time period.

It should be noted that the access point has established, by using the first communication address, a security connection to the station that uses the second communication address, and data transmission exists between the access point and the station. However, in the prior art, a communication address of an access point is fixed, and therefore, the access point may be traced, and there is a security threat to a station. In this embodiment provided in the present invention, a manner of changing communication addresses of both an access point and a station is used to ensure data transmission security, prevent user information disclosure, and improve network security.

It should be supplemented that before the access point sends the first communication address change information to the station, the access point may further receive a first communication address change instruction sent by the station, where the first communication address change instruction is used to trigger the access point to change the communication address; or the access point sends a second communication address change instruction to the station, where the second communication address change instruction is used to trigger the station to change the communication address. Processes in which the access point and the station initiate the communication address change instructions are optional, that is, in practical application, the communication address may be directly changed without triggering.

If the station initiates the first communication address change instruction, the access point sends the first communication address change information to the station that initiates the communication address change instruction and all other stations associated with the access point. The first communication address change information includes at least the third communication address, the third communication address is the communication address which is to be used by the access point after the access point changes the communication address, and the first communication address change information may further include other information, for example, the first communication address change information may further include a preset time period.

It should be supplemented that one access point may be associated with multiple stations, and when the access point is associated with multiple stations, if the access point initiates the second communication address change instruction, the access point may send the second communication address change instruction to all stations associated with the access point.

S102. The access point determines a fourth communication address.

The fourth communication address is a communication address which is to be used by the station after the station changes the communication address.

It should be noted that the fourth communication address is the communication address which is to be used by the station after the station changes the communication address, and the access point may determine the fourth communication address in two manners: The first manner is that the access point also generates the fourth communication address while generating the third communication address, and obtains the first communication address change information according to an encryption algorithm, and in this case, the first communication address change information not only includes the third communication address but also includes the fourth communication address. The other manner is that the station voluntarily generates the fourth communication address, generates second communication address change information according to an encryption algorithm, and sends the second communication address change information to the access point; and the access point parses the second communication address change information, to obtain the fourth communication address.

It should be supplemented that the access point may be associated with multiple stations. When one of the stations sends a first communication address change instruction to the access point, the access point can send the first communication address change information to all stations associated with the access point, so that all the stations associated with the access point change communication addresses at a same time. In this way, communication security can be improved, and a case in which an eavesdropper traces the access point according to any one station whose communication address has not been changed, and further traces all stations associated with the access point is avoided.

Further, when the access point generates the fourth communication address, the access point may generate different fourth communication addresses for all stations associated with the access point, which prevents a case in which the stations generate same fourth communication addresses. Therefore, a communication address conflict problem in a communication process is avoided.

S103. The access point switches the communication address from the first communication address to a third communication address, and uses the third communication address to communicate with the station whose communication address is switched from the second communication address to the fourth communication address.

It should be noted that after the access point establishes a connection to the fourth communication address of the station by using the third communication address, the access point may immediately interrupt communication between the first communication address and the second communication address of the station, and uses the third communication address to communicate with the fourth communication address of the station; or the access point may keep normal communication with the second communication address of the station by using the first communication address, where a time of continuous communication is the preset time period, and after the preset time period, the access point interrupts communication between the first communication address and the second communication address of the station, switches the communication address from the first communication address to the third communication address, and uses the third communication address to communicate with the station whose communication address is switched from the second communication address to the fourth communication address.

It should be supplemented that a specific process in which the access point uses the third communication address to communicate with the station that uses the fourth communication address may be: the access point calculates, according to the third communication address, the fourth communication address, and a storage key, a session key used when a new address is used for communication, that is, a first session key, and the storage key herein is a parameter used for converting a plaintext into a ciphertext. The access point switches the communication address from the first communication address to the third communication address when the first session key is the same as a second session key calculated by the station.

It should be noted that a message sent or received in this embodiment of the present invention may be specifically implemented with reference to a message in the IEEE802.11 standard, that is, in this embodiment of the present invention, a technical solution of changing a communication address may be completed by using a message format defined in an existing standard.

According to the communication method provided in this embodiment of the present invention, an access point uses a first communication address to communicate with a station that uses a second communication address, where the first communication address is a communication address used by the access point, and the second communication address is a communication address used by the station. The method includes: sending, by the access point, first communication address change information to the station, where the first communication address change information is used to notify the station of a communication address which is to be used by the access point after the access point changes the communication address, the first communication address change information includes at least a third communication address, and the third communication address is the communication address which is to be used by the access point after the access point changes the communication address; determining, by the access point, a fourth communication address, where the fourth communication address is a communication address which is to be used by the station after the station changes the communication address; and switching, by the access point, the communication address from the first communication address to the third communication address, and using the third communication address to communicate with the station whose communication address is switched from the second communication address to the fourth communication address.

Based on descriptions in the foregoing embodiment, in the communication method provided in this embodiment of the present invention, a third communication address of an access point can be associated with a fourth communication address of a station in a process in which the access point uses a first communication address to communicate with the station that uses a second communication address. The third communication address is a communication address which is to be used by the access point after the access point changes a communication address, and the fourth communication address is a communication address which is to be used by the station after the station changes a communication address. Before a preset time period expires, the access point may use the first communication address to communicate with the station that uses the second communication address. After the preset time period expires, both the access point and the station change the communication addresses, and the access point uses the third communication address to communicate with the station whose communication address is switched from the second communication address to the fourth communication address, which resolves a security threat problem brought by a fixed communication address of an access point in the prior art, prevents user information disclosure, and improves network security.

### Embodiment 2

This embodiment of the present invention provides a communication method. A station uses a second communication address to communicate with an access point that uses a first communication address, the second communication address is a communication address used by the station, and the first communication address is a communication address used by the access point. As shown in FIG. 2, the method includes the following steps.

S201. The station receives first communication address change information sent by the access point.

The first communication address change information is used to notify the station of a communication address which is to be used by the access point after the access point changes the communication address, the first communication address change information includes at least a third communication address, and the third communication address is the communication address which is to be used by the access point after the access point changes the communication address.

It should be noted that the access point has established, by using the first communication address, a security connection to the station that uses the second communication address, and data transmission exists between the access point and the station. However, in the prior art, a communication address of an access point is fixed, and therefore, the access point may be traced, and there is a security threat to a station. In this embodiment provided in the present invention, a manner of changing communication addresses of both an access point and a station is used to ensure data transmission security, prevent user information disclosure, and improve network security.

It should be supplemented that before the station receives the first communication address change information sent by the access point, the station may further send a first communication address change instruction, where the first communication address change instruction is used to trigger the access point to change the communication address; or the station may further receive a second communication address change instruction sent by the access point, where the second communication address change instruction is used to trigger the station to change the communication address. Processes in which the access point and the station initiate the communication address change instructions are optional, that is, in practical application, the communication address may be directly changed without triggering.

It should further be supplemented that after receiving the first communication address change instruction sent by the station, the access point may also send the second communication address change instruction to the station; or after receiving the second communication address change instruction sent by the access point, the station may also send the first communication address change instruction to the access point. This is not limited in the present invention.

If the station initiates the first communication address change instruction, the access point sends the first communication address change information to the station that initiates the communication address change instruction and all other stations associated with the access point. The first communication address change information includes at least the third communication address, the third communication address is the communication address which is to be used by the access point after the access point changes the communication address, and the first communication address change information may further include other information, for example, the first communication address change information may further include a preset time period.

It should be supplemented that one access point may be associated with multiple stations, and when the access point is associated with multiple stations, if the access point initiates the second communication address change instruction, the access point sends the second communication address change instruction to all stations associated with the access point.

S202. The station determines a fourth communication address.

The fourth communication address is a communication address which is to be used by the station after the station changes the communication address.

It should be noted that the fourth communication address is the communication address which is to be used by the station after the station changes the communication address, and the station may determine the fourth communication address in two manners: The first manner is that the station receives the first communication address change information sent by the access point, and parses the first communication address change information; and if the first communication address change information includes the fourth communication address, the address is the communication address which is to be used by the station after the station changes the communication address. The second manner is that if the first communication address change information does not include the fourth communication address, the station voluntarily generates the fourth communication address, obtains the second communication address change information according to an encryption algorithm, and sends the second communication address change information to the access point; and the access point parses the second communication address change information, to obtain the fourth communication address.

It should be supplemented that the access point may be associated with multiple stations. When one of the stations sends a first communication address change instruction to the access point, the access point can send the first communication address change information to all stations associated with the access point, so that all the stations associated with the access point change communication addresses at a same time. In this way, communication security can be improved, and a case in which an eavesdropper traces the access point according to any one station whose communication address has not been changed, and further traces all stations associated with the access point is avoided.

S203. The station switches the communication address from the second communication address to the fourth communication address, and uses the fourth communication address to communicate with the access point whose communication address is switched from the first communication address to a third communication address.

It should be noted that after the station establishes a connection to the third communication address of the access point by using the fourth communication address, the station may immediately interrupt communication between the second communication address and the first communication address of the access point, and uses the fourth communication address to communicate with the third communication address of the access point; or the station may keep normal communication with the first communication address of the access point by using the second communication address, where a time of continuous communication is the preset time period, and after the preset time period, the station interrupts communication between the second communication address and the first communication address of the access point, and switches the communication address from the second communication address to the fourth communication address, and uses the fourth communication address to communicate with the access point whose communication address is switched from the first communication address to the third communication address.

It should be supplemented that a specific process in which the station uses the fourth communication address to communicate with the access point that uses the third communication address may be: the station calculates, according to the third communication address, the fourth communication address, and a storage key, a session key used when a new address is used for communication, that is, a second session key. The station switches the communication address from the second communication address to the fourth communication address when the second session key is the same as a first session key calculated by the access point.

It should be noted that a message sent or received in this embodiment of the present invention may be specifically implemented with reference to a message in the IEEE802.11 standard, that is, in this embodiment of the present invention, a solution of changing a communication address may be completed by using a message format defined in an existing standard.

According to the communication method provided in this embodiment of the present invention, an access point uses a first communication address to communicate with a station that uses a second communication address, where the first communication address is a communication address used by the access point, the second communication address is a communication address used by the station. The method includes: receiving, by the station, first communication address change information sent by the access point, where the first communication address change information is used to notify the station of a communication address which is to be used by the access point after the access point changes the communication address, the first communication address change information includes at least a third communication address, and the third communication address is the communication address which is to be used by the access point after the access point changes the communication address; determining, by the station, a fourth communication address, where the fourth communication address is a communication address which is to be used by the station after the station changes the communication address; and switching, by the station, the communication address from the second communication address to the fourth communication address, and using the fourth communication address to communicate with the access point whose communication address is switched from the first communication address to the third communication address.

Based on descriptions in the foregoing embodiment, in the communication method provided in this embodiment of the present invention, a third communication address of an access point can be associated with a fourth communication address of a station in a process in which the access point uses a first communication address to communicate with the station that uses a second communication address. The third communication address is a communication address which is to be used by the access point after the access point changes a communication address, and the fourth communication address is a communication address which is to be used by the station after the station changes a communication address. Before a preset time period expires, the station may use the second communication address to communicate with the access point that uses the first communication address. After the preset time period expires, both the station and the access point change the communication addresses, and the station uses the fourth communication address to communicate with the access point whose communication address is switched from the first communication address to the third communication address, which resolves a security threat problem brought by a fixed communication address of an access point in the prior art, prevents user information disclosure, and improves network security.

### Embodiment 3

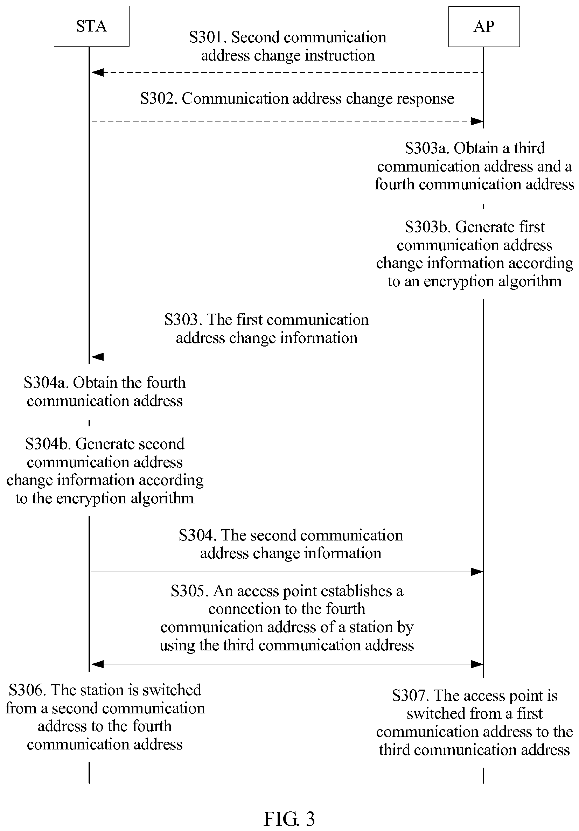

This embodiment of the present invention provides a communication method. A station uses a second communication address to communicate with an access point that uses a first communication address, the second communication address is a communication address used by the station, and the first communication address is a communication address used by the access point. In an example of this embodiment, the access point initiates a communication address change instruction and the access point generates a fourth communication address of the station. As shown in FIG. 3, the method includes the following steps.

S301. The access point sends a second communication address change instruction to the station.

It should be noted that before the access point sends the second communication address change instruction to the station, the access point has used the first communication address to perform normal communication with the second communication address used by the station. However, in the prior art, because a communication address of an access point is fixed, the access point may be easily traced. For communication security, this embodiment of the present invention provides a communication method, which can change both a communication address of an access point and a communication address of a station, prevent user information disclosure, and improve network security.

The access point sends the second communication address change instruction to the station, to trigger the station to change the communication address.

S302. The station receives the second communication address change instruction sent by the access point, and sends a communication address change response to the access point.

It should be noted that one access point may be associated with multiple stations. According to this embodiment, when the access point is associated with multiple stations, the access point sends the second communication address change instruction to all stations associated with the access point.

It should be supplemented that S301 and S302 are not indispensable. A function of S301 and S302 is triggering the access point and the station to change the communication addresses. In practical engineering application, when the access point and the station need to change the communication addresses, the access point may directly send first communication address change information to the station to change the communication address.

S303. The access point sends first communication address change information to the station.

Specifically, before the access point sends the first communication address change information to the station, the method further includes S303a and S303b.

S303a. The access point obtains a third communication address and a fourth communication address.

It should be noted that the first communication address change information includes at least the third communication address and the fourth communication address, where the third communication address is a communication address which is to be used by the access point after the access point changes the communication address, and the fourth communication address is a communication address which is to be used by the station after the station changes the communication address.

In this embodiment, because the fourth communication address of the station is generated by the access point, the first communication address change information includes at least the third communication address and the fourth communication address. Certainly, the first communication address change information may further include other information such as a preset time period.

It should be noted that the access point generates the fourth communication address for the station, and when the access point is associated with multiple stations, the access point may generate different fourth communication addresses for different stations associated with the access point, which can avoid a conflict. A specific description is the same as the description in the foregoing embodiment, and details are not described herein again.

S303b. The access point generates first communication address change information according to an encryption algorithm.

After the access point obtains the third communication address and the fourth communication address, the access point may generate the first communication address change information according to the encryption algorithm.

Specifically, the first communication address change information is included in an encrypted BSS Transition Management Request frame (network transition management request message), and the encrypted frame is included in a normal data frame.

The access point sends the encrypted first communication address change information to the station. Specifically, the access point sends the encrypted BSS Transition Management Request frame to the station. If the access point is associated with multiple stations, the access point sends the BSS Transition Management Request frame to the multiple stations.

The station receives an encrypted data frame sent by the access point, and obtains the BSS Transition Management Request frame by means of parsing according to an encryption algorithm, to obtain the third communication address, the fourth communication address, and the preset time period.

S304. The station sends second communication address change information to the access point.

Specifically, before the station sends the second communication address change information to the access point, the method further includes S304a and S304b.

S304a. The station obtains the fourth communication address.

It should be noted that the fourth communication address obtained by the station is obtained by parsing the first communication address change information.

S304b. The station generates second communication address change information according to the encryption algorithm.

After the station obtains the fourth communication address, the station may generate the second communication address change information according to the encryption algorithm.

Specifically, the second communication address change information is included in an encrypted BSS Transition Management Request frame, and the encrypted frame is included in a normal data frame. Then, the station sends the encrypted second communication address change information to the access point.

Because the third communication address of the access point has not started to communicate with the fourth communication address of the station, the station sends the second communication address change information to the first communication address of the access point by using the second communication address, where the second communication address change information may include the third communication address, the fourth communication address, and the preset time period. The third communication address, the fourth communication address, and the preset time period are obtained from the parsed first communication address change information.

S305. The access point establishes, by using the third communication address, a connection to the fourth communication address used by the station.

It should be supplemented that a process in which the access point establishes, by using the third communication address, the connection to the fourth communication address used by the station is as follows: The access point and the station calculate new keys PMK1 according to the third communication address, the fourth communication address, and a storage key PMK0, and generate session keys PTK with reference to related parameters. The session key generated by the access point is a first session key, and the session key generated by the station is a second session key. The session key is used to encrypt communication data between the access point that uses the third communication address and the station that uses the fourth communication address.

It should further be supplemented that the access point establishes, by using the third communication address, the connection to the station that uses the fourth communication address. Before the access point uses the third communication address to communicate with the fourth communication address used by the station, the access point and the station generate MIC (Message Integrity Check, message integrity check) values by using the session keys, and encrypt RIC-request (Resource information container request, resource allocation request) messages by using the session keys, where the resource allocation request message carries network side parameters such as a Qos (quality-of-service, quality of service) parameter and an IP address. A resource request message can ensure association of upper-layer services and enable an IP address and bandwidth to be corresponding to the third communication address or the fourth communication address, and is used to maintain a service between the station and the access point. The access point verifies the MIC and the RIC-request that are of the station, and the station verifies the MIC and the RIC-request that are of the access point. When verification of both the access point and the station succeeds, the first communication address of the access point may further communicate with the second communication address of the station, and after the preset time period, communication between the first communication address of the access point and the second communication address of the station is interrupted, and the third communication address of the access point is used to communicate with the fourth communication address of the station.

S306. The station is switched from the second communication address to the fourth communication address.

Within the preset time period, the station uses the second communication address to communicate with the access point that uses the first communication address.

After the preset time period, the station interrupts the communication between the second communication address and the first communication address of the access point, switches the communication address from the second communication address to the fourth communication address, and uses the fourth communication address to communicate with the access point whose communication address is switched from the first communication address to the third communication address.

S307. The access point is switched from the first communication address to the third communication address.

Within the preset time period, the access point uses the first communication address to communicate with the station that uses the second communication address.

After the preset time period, the access point interrupts the communication between the first communication address and the second communication address of the station, switches the communication address from the first communication address to the third communication address, and uses the third communication address to communicate with the station whose communication address is switched from the second communication address to the fourth communication address.

Specifically, in an example of a practical application scenario, the access point is a router, the station is a cell phone, and the router is associated with only one cell phone.

It should be noted that currently, the cell phone has established communication to the router, and the router uses a first communication address to communicate with the cell phone that uses a second communication address. After communication for a period of time, the router sends a second communication address change instruction to the cell phone, and the communication address change instruction may be carried in a BSS Transition Management Request frame, where the frame is included in a normal data frame, so that an eavesdropper still considers current communication data as normal communication data.

After receiving the second communication address change instruction sent by the router, the cell phone sends a communication address change response to the router. The router subsequently generates a third communication address, a fourth communication address, and a preset time period, and sends first communication address change information including the third communication address, the fourth communication address, and the preset time period to the cell phone, and the cell phone parses a data frame according to a current session key to obtain the third communication address, the fourth communication address, and the preset time period, and sends second communication address change information including the third communication address, the fourth communication address, and the preset time period to the router.

The router and the cell phone obtain new storage keys according to a storage key corresponding to a storage key identifier ID, the third communication address of the router, and the fourth communication address of the cell phone, and further obtain session keys with reference to related parameters. When the router uses the third communication address to communicate with the fourth communication address of the cell phone, the session key is used to encrypt communication data between the router and the cell phone. In this case, a connection is established between the third communication address of the router and the fourth communication address of the cell phone.

After the connection is established between the third communication address of the router and the fourth communication address of the cell phone, the router and the cell phone may still use original communication addresses to communicate with each other. When the preset time period after the connection is established expires, the router and the cell phone respectively use the third communication address and the fourth communication address at the same time to communicate with each other, and use the session keys to encrypt communication data.

In addition, changing communication addresses of the router and the cell phone can protect the cell phone from malicious eavesdropping and tracing, which effectively prevents user information disclosure and improves network security.

It should be supplemented that a value of the preset time period may be set according to different requirements, and is not limited in the present invention.

According to the communication method provided in this embodiment of the present invention, an access point sends first communication address change information to a station, where the first communication address change information is used to notify the station of a communication address which is to be used by the access point after the access point changes a communication address, the first communication address change information includes at least a third communication address, and the third communication address is the communication address which is to be used by the access point after the access point changes the communication address; the access point determines a fourth communication address, where the fourth communication address is a communication address which is to be used by the station after the station changes a communication address; and the access point switches the communication address from a first communication address to the third communication address, and uses the third communication address to communicate with the station whose communication address is switched from a second communication address to the fourth communication address.

Based on descriptions in the foregoing embodiment, in the communication method provided in this embodiment of the present invention, a third communication address of an access point can be associated with a fourth communication address of a station in a process in which the access point uses a first communication address to communicate with the station that uses a second communication address. The third communication address is a communication address which is to be used by the access point after the access point changes a communication address, and the fourth communication address is a communication address which is to be used by the station after the station changes a communication address. Before a preset time period expires, the access point may use the first communication address to communicate with the station that uses the second communication address. After the preset time period expires, both the access point and the station change the communication addresses, and the access point uses the third communication address to communicate with the station whose communication address is switched from the second communication address to the fourth communication address, which resolves a security threat problem brought by a fixed communication address of an access point in the prior art, prevents user information disclosure, and improves network security.

### Embodiment 4

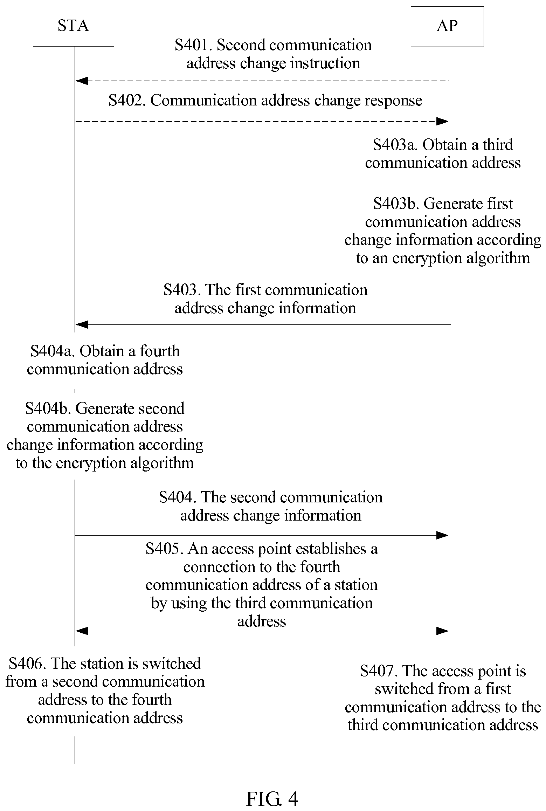

This embodiment of the present invention provides a communication method. A station uses a second communication address to communicate with an access point that uses a first communication address, the second communication address is a communication address used by the station, and the first communication address is a communication address used by the access point. In an example of this embodiment, the access point initiates a communication address change instruction and the station generates a fourth communication address. As shown in FIG. 4, the method includes the following steps.

S401. The access point sends a second communication address change instruction to the station.

It should be noted that before the access point sends the second communication address change instruction to the station, the access point has used the first communication address to communicate with the second communication address used by the station. However, in the prior art, because a communication address of an access point is fixed, the access point may be easily traced. For communication security, this embodiment of the present invention provides a communication method, which can change both a communication address of an access point and a communication address of a station, prevent user information disclosure, and improve network security.

The access point sends the second communication address change instruction to the station, and triggers the station to change the communication address of the station.

S402. The station receives the second communication address change instruction sent by the access point, and sends a communication address change response to the access point.

It should be noted that one access point may be associated with multiple stations. According to this embodiment, when the access point is associated with multiple stations, the access point sends the second communication address change instruction to all stations associated with the access point.

It should be supplemented that S401 and S402 are not indispensable, and when the access point and the station need to change the communication addresses, step S403 may be directly performed.

S403. The access point sends first communication address change information to the station.

Specifically, before the access point sends the first communication address change information to the station, the method further includes S403a and S403b.

S403a. The access point obtains a third communication address.

It should be noted that the first communication address change information includes at least the third communication address and does not include the fourth communication address, and the third communication address is a communication address which is to be used by the access point after the access point changes the communication address.

In this embodiment, because the fourth communication address of the station is generated by the station, the first communication address change information includes at least the third communication address and does not include the fourth communication address. Certainly, the first communication address change information may further include other information such as a preset time period.

S403b. The access point generates first communication address change information according to an encryption algorithm.

After the access point obtains the third communication address, the access point may generate the first communication address change information according to the encryption algorithm.

Specifically, the first communication address change information is included in an encrypted BSS Transition Management Request frame, and the encrypted frame is included in a normal data frame.

The access point sends the encrypted first communication address change information to the station. Specifically, the access point sends the encrypted BSS Transition Management Request frame to the station. If the access point is associated with multiple stations, the access point sends the BSS Transition Management Request frame to all stations associated with the access point.

The station receives an encrypted data frame sent by the access point, and obtains the BSS Transition Management Request frame by means of parsing according to an encryption algorithm, to obtain the third communication address and the preset time period.

S404. The station sends second communication address change information to the access point.

Specifically, before the station sends the second communication address change information to the access point, the method further includes S404a and S404b.

S404a. The station obtains a fourth communication address.

It should be noted that the fourth communication address obtained by the station is generated by the station.

S404b. The station generates second communication address change information according to the encryption algorithm.

After the station obtains the fourth communication address, the station may generate the second communication address change information according to the encryption algorithm.

Specifically, the second communication address change information is included in an encrypted BSS Transition Management Request frame, and the encrypted frame is included in a normal data frame. Then, the station sends the encrypted second communication address change information to the access point.

Because the third communication address of the access point has not started to communicate with the fourth communication address of the station, the station sends the second communication address change information to the first communication address of the access point by using the second communication address. The second communication address change information may include the third communication address, the fourth communication address, and the preset time period. The third communication address and the preset time period are obtained from the parsed first communication address change information, and the fourth communication address is generated by the station.

S405. The access point establishes, by using the third communication address, a connection to the fourth communication address used by the station.

Specifically, a process of performing S405 is the same as that of S305, and details are not described herein again.

S406. The station is switched from the second communication address to the fourth communication address.

Specifically, a process for performing S406 is the same as that of S306, and details are not described herein again.

S407. The access point is switched from the first communication address to the third communication address.

Specifically, a process for performing S407 is the same as that of S307, and details are not described herein again.

In a specific application scenario, except that the fourth communication address is generated by a cell phone, other parts that are not described are the same as the application scenario described in Embodiment 3, and details are not described herein again.

According to the communication method provided in this embodiment of the present invention, an access point sends first communication address change information to a station, where the first communication address change information is used to notify the station of a communication address which is to be used by the access point after the access point changes a communication address, the first communication address change information includes at least a third communication address, and the third communication address is the communication address which is to be used by the access point after the access point changes the communication address; the access point determines a fourth communication address, where the fourth communication address is a communication address which is to be used by the station after the station changes a communication address; and the access point switches the communication address from a first communication address to the third communication address, and uses the third communication address to communicate with the station whose communication address is switched from a second communication address to the fourth communication address.

Based on descriptions in the foregoing embodiment, in the communication method provided in this embodiment of the present invention, a third communication address of an access point can be associated with a fourth communication address of a station in a process in which the access point uses a first communication address to communicate with the station that uses a second communication address. The third communication address is a communication address which is to be used by the access point after the access point changes a communication address, and the fourth communication address is a communication address which is to be used by the station after the station changes a communication address. Before a preset time period expires, the access point may use the first communication address to communicate with the station that uses the second communication address. After the preset time period expires, both the access point and the station change the communication addresses, and the access point uses the third communication address to communicate with the station whose communication address is switched from the second communication address to the fourth communication address, which resolves a security threat problem brought by a fixed communication address of an access point in the prior art, prevents user information disclosure, and improves network security.

### Embodiment 5

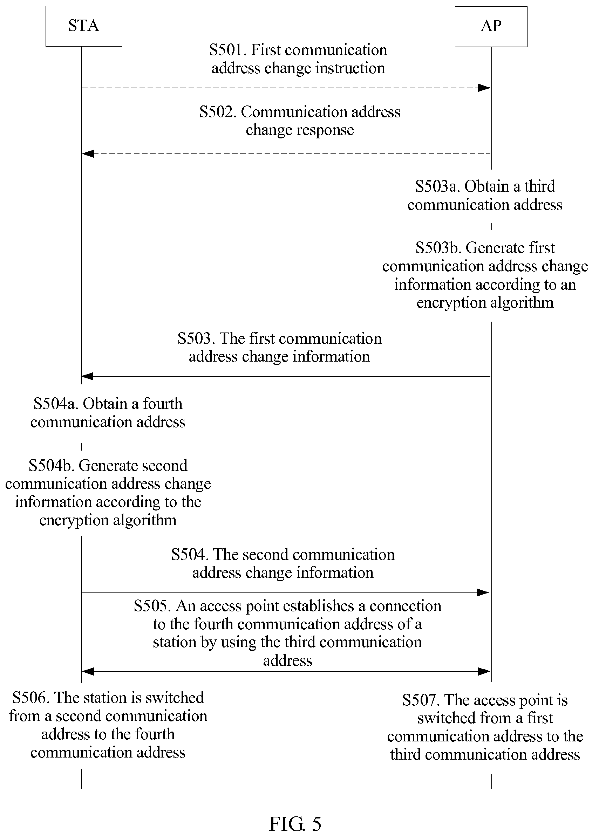

This embodiment of the present invention provides a communication method. A station uses a second communication address to communicate with an access point that uses a first communication address, the second communication address is a communication address used by the station, and the first communication address is a communication address used by the access point. In an example of this embodiment, the station initiates a communication address change instruction and the station generates a fourth communication address. As shown in FIG. 5, the method includes the following steps.

S501. The station sends a first communication address change instruction to the access point.

It should be noted that before the station sends the first communication address change instruction to the access point, the station has used the second communication address to communicate with the first communication address used by the access point.

The station sends the first communication address change instruction to the access point, and triggers the access point to change the communication address of the access point, to prevent malicious eavesdropping.

S502. The access point receives the first communication address change instruction sent by the station, and sends a communication address change response to the station.

It should be noted that one access point may be associated with multiple stations. According to this embodiment, when the access point is associated with multiple stations, the access point and all stations associated with the access point need to change communication addresses.

S503. The access point sends first communication address change information to the station.

Specifically, before the access point sends the first communication address change information to the station, the method further includes S503a and S503b.

S503a. The access point obtains a third communication address.

It should be noted that the access point generates the third communication address.

S503b. The access point generates first communication address change information according to an encryption algorithm.

After the access point obtains the third communication address, the access point may generate the first communication address change information according to the encryption algorithm.

Specifically, the first communication address change information is included in an encrypted BSS Transition Management Request frame, and the encrypted frame is included in a normal data frame, and then the access point sends the encrypted first communication address change information to the station.

S504. The station sends second communication address change information to the access point.

Specifically, before the station sends the second communication address change information to the access point, the method further includes S504a and S504b.

S504a. The station obtains a fourth communication address.

It should be noted that the station sends the second communication address change information to the access point, the second communication address change information includes at least the fourth communication address, and the fourth communication address is a communication address which is to be used by the station after the station changes the communication address. In this embodiment, the fourth communication address of the station is generated by the station.

S504b. The station generates second communication address change information according to the encryption algorithm.

After the station obtains the fourth communication address, the station may generate the second communication address change information according to the encryption algorithm.

Specifically, the second communication address change information is included in an encrypted BSS Transition Management Request frame, and the encrypted frame is included in a normal data frame. Then, the station sends the encrypted second communication address change information to the access point.

Specifically, the station sends the encrypted BSS Transition Management Request frame to the access point; and the access point receives encrypted data frame sent by the station, and obtains the BSS Transition Management Request frame by means of parsing according to an encryption algorithm, to obtain the fourth communication address.

S505. The access point establishes, by using the third communication address, a connection to the fourth communication address used by the station.

Specifically, a process of performing S505 is the same as that of S305, and details are not described herein again.

S506. The station is switched from the second communication address to the fourth communication address.

Specifically, a process of performing S506 is the same as that of S306, and details are not described herein again.

S507. The access point is switched from the first communication address to the third communication address.

Specifically, a process of performing S507 is the same as that of S307, and details are not described herein again.

In a specific application scenario, except that the first communication address change instruction is initiated by a cell phone, other parts that are not described are the same as the scenario described in Embodiment 3, and details are not described herein again.

According to the communication method provided in this embodiment of the present invention, an access point sends first communication address change information to a station, where the first communication address change information is used to notify the station of a communication address which is to be used by the access point after the access point changes a communication address, the first communication address change information includes at least a third communication address, and the third communication address is the communication address which is to be used by the access point after the access point changes the communication address; the access point determines a fourth communication address, where the fourth communication address is a communication address which is to be used by the station after the station changes a communication address; and the access point switches the communication address from a first communication address to the third communication address, and uses the third communication address to communicate with the station whose communication address is switched from a second communication address to the fourth communication address.

Based on descriptions in the foregoing embodiment, in the communication method provided in this embodiment of the present invention, a third communication address of an access point can be associated with a fourth communication address of a station in a process in which the access point uses a first communication address to communicate with the station that uses a second communication address. The third communication address is a communication address which is to be used by the access point after the access point changes a communication address, and the fourth communication address is a communication address which is to be used by the station after the station changes a communication address. Before a preset time period expires, the access point may use the first communication address to communicate with the station that uses the second communication address. After the preset time period expires, both the access point and the station change the communication addresses, and the access point uses the third communication address to communicate with the station whose communication address is switched from the second communication address to the fourth communication address, which resolves a security threat problem brought by a fixed communication address of an access point in the prior art, prevents user information disclosure, and improves network security.

### Embodiment 6

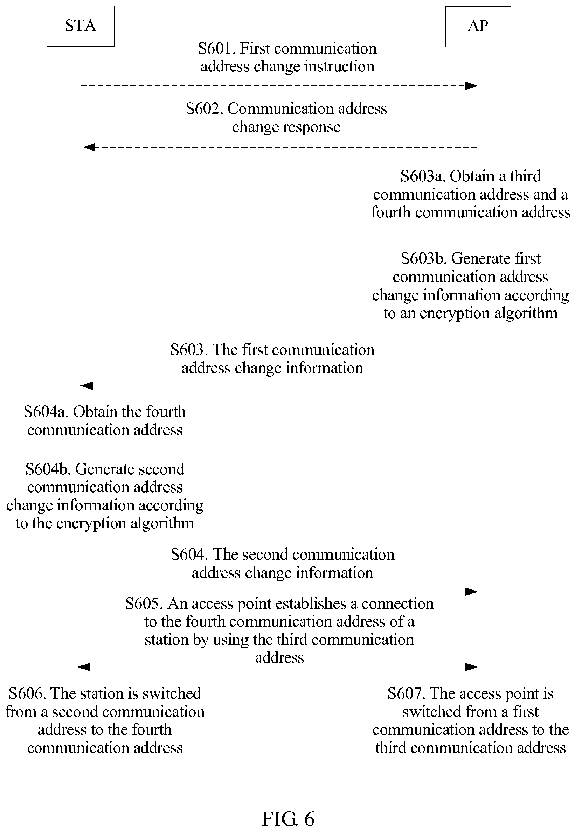

This embodiment of the present invention provides a communication method. A station uses a second communication address to communicate with an access point that uses a first communication address, the second communication address is a communication address used by the station, and the first communication address is a communication address used by the access point. In an example of this embodiment, the station first sends a first communication address change instruction and the access point generates a fourth communication address of the station. As shown in FIG. 6, the method includes the following steps.

S601. The station sends a first communication address change instruction to the access point.

It should be noted that before the station sends the first communication address change instruction to the access point, the station has used the second communication address to communicate with the first communication address used by the access point.

The station sends the first communication address change instruction to the access point, and triggers the access point to change the communication address of the access point, to prevent malicious eavesdropping.

S602. The access point receives the first communication address change instruction sent by the station, and sends a communication address change response to the station.

It should be noted that one access point may be associated with multiple stations. According to this embodiment, when the access point is associated with multiple stations, the access point and all stations associated with the access point need to change communication addresses.

S603. The access point sends first communication address change information to the station.

Specifically, before the access point sends the first communication address change information to the station, the method further includes S603a and S603b.

S603a. The access point obtains a third communication address and a fourth communication address.

After the access point receives the first communication address change instruction sent by the station, the access point sends the first communication address change information to the station. In this embodiment, because the fourth communication address of the station is generated by the access point, the first communication address change information includes at least the third communication address and the fourth communication address. Certainly, the first communication address change information may further include other information such as a preset time period.

It should be noted that the access point may be associated with multiple stations. According to this embodiment, when the access point is associated with multiple stations, the access point generates different fourth communication addresses for all stations associated with the access point. In this way, a conflict can be avoided, and specific details are described in the foregoing embodiment and are not described herein again.

S603b. The access point generates first communication address change information according to an encryption algorithm.

After the access point obtains the third communication address and the fourth communication address, the access point may generate the first communication address change information according to the encryption algorithm.

Specifically, the first communication address change information is included in an encrypted BSS Transition Management Request frame, and the encrypted frame is included in a normal data frame, and then the access point sends the encrypted first communication address change information to the station.

Specifically, the access point sends the encrypted BSS Transition Management Request frame to the station. If the access point is associated with multiple stations, the access point sends the BSS Transition Management Request frame to the multiple stations.

The station receives an encrypted data frame sent by the access point, and obtains the BSS Transition Management Request frame by means of parsing according to an encryption algorithm, to obtain the third communication address, the fourth communication address, and the preset time period.

S604. The station sends second communication address change information to the access point.

Specifically, before the station sends the second communication address change information to the access point, the method further includes S604a and S604b.

S604a. The station obtains the fourth communication address.

It should be noted that the fourth communication address obtained by the station is obtained by parsing the first communication address change information.

S604b. The station generates second communication address change information according to the encryption algorithm.

After the station obtains the fourth communication address, the station may generate the second communication address change information according to the encryption algorithm.

Specifically, the second communication address change information is included in an encrypted BSS Transition Management Request frame, and the encrypted frame is included in a normal data frame. The station sends the encrypted second communication address change information to the access point.

S605. The access point establishes, by using the third communication address, a connection to the fourth communication address used by the station.

Specifically, a process of performing S605 is the same as that of S305, and details are not described herein again.

S606. The station is switched from the second communication address to the fourth communication address.

Specifically, a process of performing S606 is the same as that of S306, and details are not described herein again.

S607. The access point is switched from the first communication address to the third communication address.

Specifically, a process of performing S607 is the same as that of S307, and details are not described herein again.

In a specific application scenario, except that the first communication address change instruction is initiated by a cell phone and the fourth communication address is generated by the cell phone, other parts that are not described are the same as the scenario described in Embodiment 3, and details are not described herein again.

According to the communication method provided in this embodiment of the present invention, an access point sends first communication address change information to a station, where the first communication address change information is used to notify the station of a communication address which is to be used by the access point after the access point changes a communication address, the first communication address change information includes at least a third communication address, and the third communication address is the communication address which is to be used by the access point after the access point changes the communication address; the access point determines a fourth communication address, where the fourth communication address is a communication address which is to be used by the station after the station changes a communication address; and the access point switches the communication address from a first communication address to the third communication address, and uses the third communication address to communicate with the station whose communication address is switched from a second communication address to the fourth communication address.

Based on descriptions in the foregoing embodiment, in the communication method provided in this embodiment of the present invention, a third communication address of an access point can be associated with a fourth communication address of a station in a process in which the access point uses a first communication address to communicate with the station that uses a second communication address. The third communication address is a communication address which is to be used by the access point after the access point changes a communication address, and the fourth communication address is a communication address which is to be used by the station after the station changes a communication address. Before a preset time period expires, the access point may use the first communication address to communicate with the station that uses the second communication address. After the preset time period expires, both the access point and the station change the communication addresses, and the access point uses the third communication address to communicate with the station whose communication address is switched from the second communication address to the fourth communication address, which resolves a security threat problem brought by a fixed communication address of an access point in the prior art, prevents user information disclosure, and improves network security.

### Embodiment 7

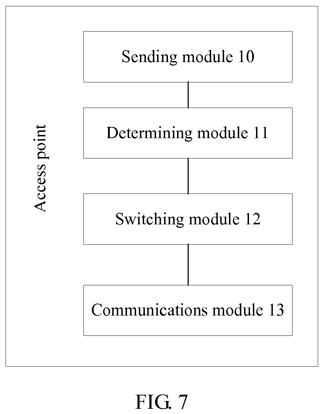

This embodiment of the present invention provides an access point. The access point uses a first communication address to communicate with a station that uses a second communication address, the first communication address is a communication address used by the access point, and the second communication address is a communication address used by the station. As shown in FIG. 7, the access point includes a sending module 10, a determining module 11, a switching module 12, and a communications module 13.

The sending module 10 is configured to send first communication address change information to the station, where the first communication address change information is used to notify the station of a communication address which is to be used by the access point after the access point changes the communication address, the first communication address change information includes at least a third communication address, and the third communication address is the communication address which is to be used by the access point after the access point changes the communication address.

The determining module 11 is configured to determine a fourth communication address, where the fourth communication address is a communication address which is to be used by the station after the station changes the communication address.

The switching module 12 is configured to switch the communication address from the first communication address to the third communication address.

The communications module 13 is configured to use the third communication address to communicate with the station whose communication address is switched from the second communication address to the fourth communication address.

It should be noted that the first communication address change information sent by the sending module 10 may be in two forms. For example, the first communication address change information includes at least the third communication address and the fourth communication address, or the first communication address change information includes at least the third communication address and does not include the fourth communication address.

Further, the determining module 11 is specifically configured to generate the fourth communication address and receive second communication address change information sent by the station. The second communication address change information is used to notify the access point of the communication address which is to be used by the station after the station changes the communication address, and the second communication address change information includes at least the fourth communication address.

It should be supplemented that the first communication address change information further includes a preset time period.

Further, the switching module 12 is specifically configured to: after the preset time period, interrupt communication between the first communication address and the second communication address of the station, and switch the communication address from the first communication address to the third communication address.

Specifically the communications module 13 is further configured to use, within the preset time period, the first communication address to communicate with the station that uses the second communication address, and if the communication address switch completes, the communications module 13 is further configured to use, by the access point, the third communication address to communicate with the station whose communication address is switched from the second communication address to the fourth communication address.

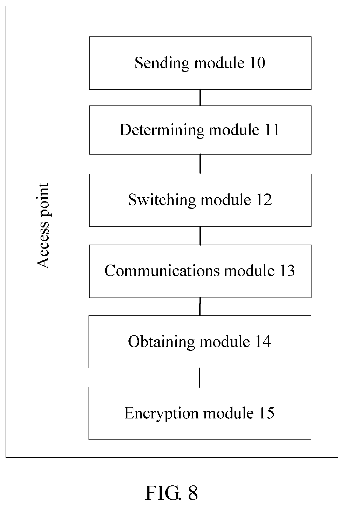

Further, as shown in FIG. 8, the access point further includes:
an obtaining module 14, configured to: before the sending module 10 sends the first communication address change information to the station, obtain the third communication address or obtain the third communication address and the fourth communication address; and
an encryption module 15, configured to encrypt the third communication address or the third communication address and the fourth communication address according to an encryption algorithm, to generate the first communication address change information.

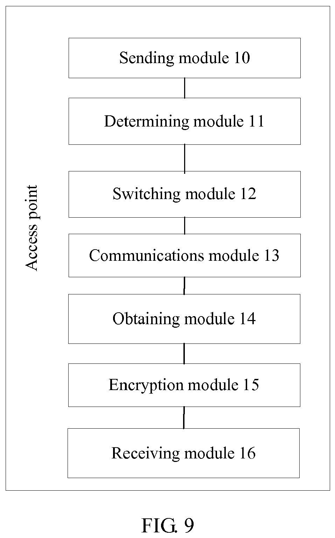

Further, as shown in FIG. 9, the access point further includes:
a receiving module 16, configured to receive, before the sending module 10 sends the first communication address change information to the station, a first communication address change instruction sent by the station, where the first communication address change instruction is used to trigger the access point to change the communication address.

It should be supplemented that the sending module 10 is further configured to send a second communication address change instruction to the station before the sending module 10 sends the first communication address change information to the station, where the second communication address change instruction is used to trigger the station to change the communication address.

Further, the sending module 10 is specifically configured to send the first communication address change information to all stations after the receiving module 16 receives a first communication address change instruction sent by one station.

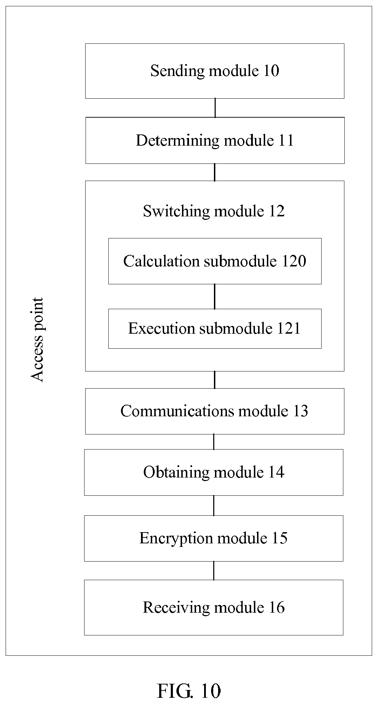

Further, as shown in FIG. 10, the switching module 12 specifically includes:
a calculation submodule 120, configured to calculate a first session key according to the third communication address and the fourth communication address; and
an execution submodule 121, configured to switch the communication address from the first communication address to the third communication address if the first session key matches a second session key, where the second session key is calculated by the station according to the third communication address and the fourth communication address.

According to the access point provided in this embodiment of the present invention, the access point includes: a sending module, configured to send first communication address change information to a station, where the first communication address change information is used to notify the station of a communication address which is to be used by the access point after the access point changes a communication address, the first communication address change information includes at least a third communication address, and the third communication address is the communication address which is to be used by the access point after the access point changes the communication address; a determining module, configured to determine a fourth communication address, where the fourth communication address is a communication address which is to be used by the station after the station changes a communication address; a switching module, configured to switch the communication address from a first communication address to the third communication address; and a communications module, configured to use the third communication address to communicate with the station whose communication address is switched from a second communication address to the fourth communication address.

Based on descriptions in the foregoing embodiment, the access point provided in this embodiment of the present invention can enable a third communication address of the access point to be associated with a fourth communication address of a station in a process in which the access point uses a first communication address to communicate with the station that uses a second communication address. The third communication address is a communication address which is to be used by the access point after the access point changes a communication address, and the fourth communication address is a communication address which is to be used by the station after the station changes a communication address. Before a preset time period expires, the access point may use the first communication address to communicate with the station that uses the second communication address. After the preset time period expires, both the access point and the station change the communication addresses, and the access point uses the third communication address to communicate with the station whose communication address is switched from the second communication address to the fourth communication address, which resolves a security threat problem brought by a fixed communication address of an access point in the prior art, prevents user information disclosure, and improves network security.

### Embodiment 8

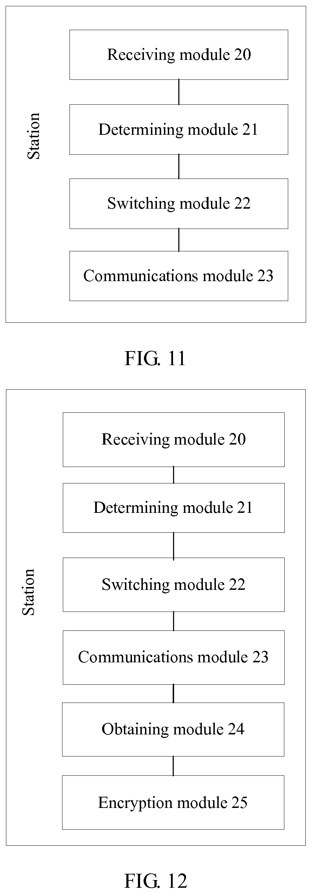

This embodiment of the present invention provides a station. The station uses a second communication address to communicate with an access point that uses a first communication address, the first communication address is a communication address used by the access point, and the second communication address is a communication address used by the station. As shown in FIG. 11, the station includes a receiving module 20, a determining module 21, a switching module 22, and a communications module 23.

The receiving module 20 is configured to receive first communication address change information sent by the access point, where the first communication address change information is used to notify the station of a communication address which is to be used by the access point after the access point changes the communication address, the first communication address change information includes at least a third communication address, and the third communication address is the communication address which is to be used by the access point after the access point changes the communication address.

The determining module 21 is configured to determine a fourth communication address, where the fourth communication address is a communication address which is to be used by the station after the station changes the communication address.

The switching module 22 is configured to switch the communication address from the second communication address to the fourth communication address.

The communications module 23 is configured to use the fourth communication address to communicate with the access point whose communication address is switched from the first communication address to the third communication address.

Further, the determining module 21 is specifically configured to obtain the fourth communication address according to the first communication address change information, where the first communication address change information further includes the fourth communication address; or the determining module 21 is configured to generate the fourth communication address.

It should be supplemented that the first communication address change information further includes a preset time period.

Further, the switching module 22 is specifically configured to: after the preset time period, interrupt communication between the second communication address and the first communication address of the access point, and switch the communication address from the second communication address to the fourth communication address.

Specifically, the communications module 23 is further configured to use, before the preset time period, the second communication address to communicate with the access point that uses the first communication address.

Further, as shown in FIG. 12, the station further includes:
an obtaining module 24, configured to obtain the fourth communication address before the sending module 26 sends second communication address change information to the access point; and
an encryption module 25, configured to encrypt the fourth communication address according to an encryption algorithm, to generate the second communication address change information.

The second communication address change information is used to notify the access point of the communication address which is to be used by the station after the station changes the communication address, and the second communication address change information includes at least the fourth communication address.

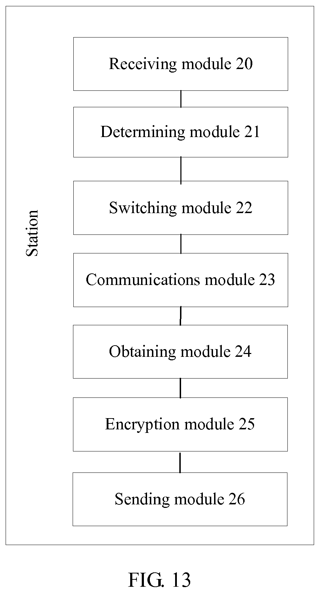

Further, as shown in FIG. 13, the station further includes:
a sending module 26, configured to send a first communication address change instruction to the access point before the receiving module 20 receives the first communication address change information sent by the access point, where the first communication address change instruction is used to trigger the access point to change the communication address, and the sending module is further configured to send the second communication address change information to the access point.

It should be supplemented that the receiving module 20 is further configured to receive, before the receiving module 20 receives the first communication address change information sent by the access point, a second communication address change instruction sent by the access point, where the second communication address change instruction is used to trigger the station to change the communication address.

Further, the receiving module 20 is specifically configured to receive, after a sending module 26 of one station sends first communication address change information to the access point, the first communication address change information sent by the access point.

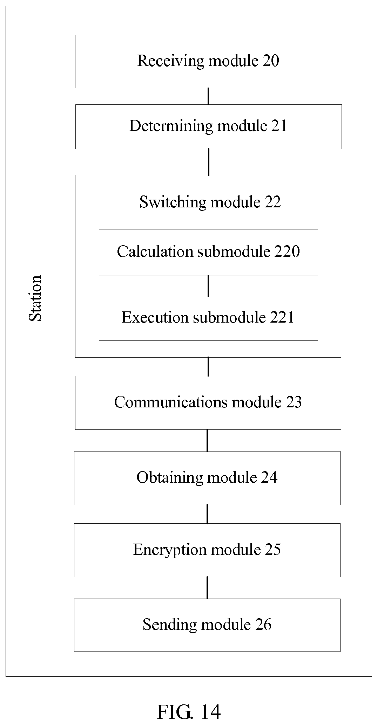

Further, as shown in FIG. 14, the switching module 22 of the station specifically includes:
a calculation submodule 220, configured to calculate a second session key according to the third communication address and the fourth communication address; and
an execution submodule 221, configured to switch the communication address from the second communication address to the fourth communication address if the second session key matches a first session key, where the first session key is calculated by the access point according to the third communication address and the fourth communication address.

According to the station provided in this embodiment of the present invention, the station includes: a receiving module, configured to receive first communication address change information sent by an access point, where the first communication address change information is used to notify the station of a communication address which is to be used by the access point after the access point changes a communication address, the first communication address change information includes at least a third communication address, and the third communication address is the communication address which is to be used by the access point after the access point changes the communication address; a determining module, configured to determine a fourth communication address, where the fourth communication address is a communication address which is to be used by the station after the station changes a communication address; a switching module, configured to switch the communication address from a second communication address to the fourth communication address; and a communications module, configured to use the fourth communication address to communicate with the access point whose communication address is switched from a first communication address to the third communication address.

Based on descriptions in the foregoing embodiment, the station provided in this embodiment of the present invention can enable a third communication address of an access point to be associated with a fourth communication address of the station in a process in which the access point uses a first communication address to communicate with the station that uses a second communication address. The third communication address is a communication address which is to be used by the access point after the access point changes a communication address, and the fourth communication address is a communication address which is to be used by the station after the station changes a communication address. Before a preset time period expires, the station may use the second communication address to communicate with the access point that uses the first communication address. After the preset time period expires, both the access point and the station change the communication addresses, and the access point uses the third communication address to communicate with the station whose communication address is switched from the second communication address to the fourth communication address, which resolves a security threat problem brought by a fixed communication address of an access point in the prior art, prevents user information disclosure, and improves network security.

### Embodiment 9

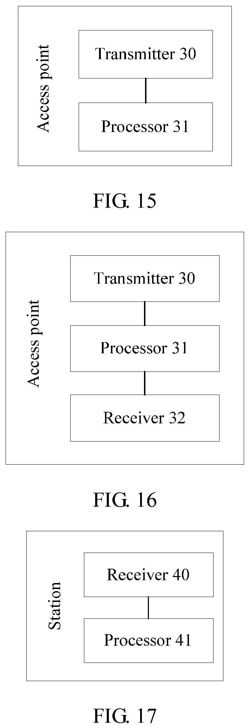

This embodiment of the present invention provides an access point. The access point uses a first communication address to communicate with a station that uses a second communication address, the first communication address is a communication address used by the access point, and the second communication address is a communication address used by the station. As shown in FIG. 15, the access point includes a transmitter 30 and a processor 31 (there may be one or more processors, and one processor is used as an example in this embodiment).

The transmitter 30 is configured to send first communication address change information to the station, where the first communication address change information is used to notify the station of a communication address which is to be used by the access point after the access point changes the communication address, the first communication address change information includes at least a third communication address, and the third communication address is the communication address which is to be used by the access point after the access point changes the communication address.

The processor 31 is configured to determine a fourth communication address, where the fourth communication address is a communication address which is to be used by the station after the station changes the communication address.

The processor 31 is further configured to switch the communication address from the first communication address to the third communication address.

The processor 31 uses the third communication address to communicate with the station whose communication address is switched from the second communication address to the fourth communication address.

Further, that the processor 31 determines the fourth communication address specifically includes: generating the fourth communication address or receiving second communication address change information sent by the station. The second communication address change information is used to notify the access point of the communication address which is to be used by the station after the station changes the communication address, and the second communication address change information includes at least the fourth communication address.

It should be supplemented that the first communication address change information further includes a preset time period.

Further, the processor 31 is specifically configured to: after the preset time period, interrupt communication between the first communication address and the second communication address of the station, and switch the communication address from the first communication address to the third communication address. The processor 31 is further configured to use, within the preset time period, the first communication address to communicate with the station that uses the second communication address. If the communication address switch completes, the processor 31 is further configured to use, by the access point, the third communication address to communicate with the station whose communication address is switched from the second communication address to the fourth communication address.

Further, the processor 31 is configured to: before the transmitter 30 sends the first communication address change information to the station, obtain the third communication address or obtain the third communication address and the fourth communication address; and then encrypt the third communication address or the third communication address and the fourth communication address according to an encryption algorithm, to generate the first communication address change information.

Further, as shown in FIG. 16, the access point further includes: a receiver 32, configured to receive, before the transmitter 30 sends the first communication address change information to the station, a first communication address change instruction sent by the station, where the first communication address change instruction is used to trigger the access point to change the communication address.

It should be supplemented that the transmitter 30 is specifically configured to send the first communication address change information to all stations after the receiver 32 receives a first communication address change instruction sent by one station.

It should be noted that the processor 31 is further configured to calculate a first session key according to the third communication address and the fourth communication address. If the first session key matches a second session key, the processor 31 switches the communication address from the first communication address to the third communication address, and uses the third communication address to communicate with the station whose communication address is switched from the second communication address to the fourth communication address, where the second session key is calculated by the station according to the third communication address and the fourth communication address.

According to the access point provided in this embodiment of the present invention, a transmitter sends first communication address change information to a station, where the first communication address change information includes at least a third communication address, and the third communication address is a communication address which is to be used by the access point after the access point changes a communication address; a receiver receives second communication address change information sent by the station, where the second communication address change information includes at least a fourth communication address, and the fourth communication address is a communication address which is to be used by the station after the station changes a communication address; and a processor switches the communication address from a first communication address to the third communication address, and uses the third communication address to communicate with the station whose communication address is switched from a second communication address to the fourth communication address.

Based on descriptions in the foregoing embodiment, the access point provided in this embodiment of the present invention can enable a third communication address of the access point to be associated with a fourth communication address of a station in a process in which the access point uses a first communication address to communicate with the station that uses a second communication address. The third communication address is a communication address which is to be used by the access point after the access point changes a communication address, and the fourth communication address is a communication address which is to be used by the station after the station changes a communication address. Before a preset time period expires, the access point uses the first communication address to communicate with the station that uses the second communication address. After the preset time period expires, both the access point and the station change the communication addresses, and the access point uses the third communication address to communicate with the station whose communication address is switched from the second communication address to the fourth communication address, which resolves a security threat problem brought by a fixed communication address of an access point in the prior art, prevents user information disclosure, and improves network security.

### Embodiment 10

This embodiment of the present invention provides a station. The station uses a second communication address to communicate with an access point that uses a first communication address, the first communication address is a communication address used by the access point, and the second communication address is a communication address used by the station. As shown in FIG. 17, the station includes a receiver 40 and a processor 41.

The receiver 40 is configured to receive first communication address change information sent by the access point, where the first communication address change information is used to notify the station of a communication address which is to be used by the access point after the access point changes the communication address, the first communication address change information includes at least a third communication address, and the third communication address is the communication address which is to be used by the access point after the access point changes the communication address. The first communication address change information may further include a preset time period.

The processor 41 is configured to determine a fourth communication address, where the fourth communication address is a communication address which is to be used by the station after the station changes the communication address.

The processor 41 is further configured to switch the communication address from the second communication address to the fourth communication address.

The processor 41 uses the fourth communication address to communicate with the access point whose communication address is switched from the first communication address to the third communication address.

Further, that the processor 41 determines the fourth communication address specifically includes: obtaining the fourth communication address according to the first communication address change information, where the first communication address change information further includes the fourth communication address; or the processor 41 generates the fourth communication address.

It should be supplemented that the first communication address change information further includes a preset time period.

Further, the processor 41 is specifically configured to: after the preset time period, interrupt communication between the second communication address and the first communication address of the access point, and switch the communication address from the second communication address to the fourth communication address. The processor 41 is further configured to use, before the preset time period, the second communication address to communicate with the access point that uses the first communication address.

Further, the processor 41 is configured to: before the transmitter 42 sends second communication address change information to the access point, obtain the fourth communication address, and then encrypt the fourth communication address according to an encryption algorithm, to generate the second communication address change information.

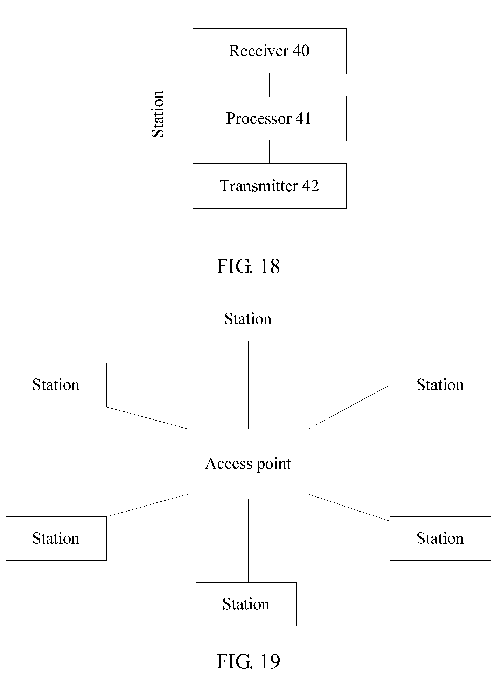

Further, as shown in FIG. 18, the station further includes: a transmitter 42, configured to send a first communication address change instruction to the access point before the receiver 40 receives the first communication address change information sent by the access point, where the first communication address change instruction is used to trigger the access point to change the communication address, and the transmitter 42 is further configured to send the second communication address change information to the access point.

It should be supplemented that the receiver 40 is further configured to receive, before the receiver 40 receives the first communication address change information sent by the access point, a second communication address change instruction sent by the access point, where the second communication address change instruction is used to trigger the station to change the communication address.

Further, the receiver 40 is specifically configured to receive, after a transmitter 42 of one station sends a first communication address change instruction to the access point, the first communication address change information sent by the access point.

Further, the processor 41 is further configured to: calculate a second session key according to the third communication address and the fourth communication address, and switch the communication address from the second communication address to the fourth communication address if the second session key matches a first session key.

According to the station provided in this embodiment of the present invention, a receiver receives first communication address change information sent by an access point, where the first communication address change information includes at least a third communication address, and the third communication address is a communication address which is to be used by the access point after the access point changes a communication address; a transmitter sends second communication address change information to the access point, where the second communication address change information includes at least a fourth communication address, and the fourth communication address is a communication address which is to be used by the station after the station changes a communication address; and a processor switches the communication address from a second communication address to the fourth communication address, and uses the fourth communication address to communicate with the access point whose communication address is switched from a first communication address to the third communication address.

Based on descriptions in the foregoing embodiment, the station provided in this embodiment of the present invention can enable a third communication address of an access point to be associated with a fourth communication address of the station in a process in which the access point uses a first communication address to communicate with the station that uses a second communication address. The third communication address is a communication address which is to be used by the access point after the access point changes a communication address, and the fourth communication address is a communication address which is to be used by the station after the station changes a communication address. Before a preset time period expires, the station uses the second communication address to communicate with the access point that uses the first communication address. After the preset time period expires, both the access point and the station change the communication addresses, and the access point uses the third communication address to communicate with the station whose communication address is switched from the second communication address to the fourth communication address, which resolves a security threat problem brought by a fixed communication address of an access point in the prior art, prevents user information disclosure, and improves network security.

### Embodiment 11

This embodiment of the present invention provides a communications system. As shown in FIG. 19, the communications system includes the access point described in Embodiment 7 and at least one station described in Embodiment 8.

Based on descriptions in the foregoing embodiments, in the communications system provided in this embodiment of the present invention, a third communication address of an access point can be associated with a fourth communication address of a station in a process in which the access point uses a first communication address to communicate with the station that uses a second communication address. Before a preset time period expires, the access point may use the first communication address to communicate with the station that uses the second communication address. After the preset time period expires, both the access point and the station change the communication addresses, and the access point uses the third communication address to communicate with the station whose communication address is switched from the second communication address to the fourth communication address, which resolves a security threat problem brought by a fixed communication address of an access point in the prior art, prevents user information disclosure, and improves network security.

### Embodiment 12

This embodiment of the present invention provides a communications system. As shown in FIG. 19, the communications system includes the access point described in Embodiment 9 and at least one station described in Embodiment 10.

Based on descriptions in the foregoing embodiments, in the communications system provided in this embodiment of the present invention, a third communication address of an access point can be associated with a fourth communication address of a station in a process in which the access point uses a first communication address to communicate with the station that uses a second communication address. Before a preset time period expires, the station uses the second communication address to communicate with the access point that uses the first communication address. After the preset time period expires, both the station and the access point change communication addresses, and the access point uses the fourth communication address to communicate with the access point whose communication address is switched from the first communication address to the third communication address, which resolves a security threat problem brought by a fixed communication address of an access point in the prior art, prevents user information disclosure, and improves network security.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

The term "and/or" used herein indicates and includes any or all possible combinations of one or more associated listed items.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method, wherein an access point uses a first communication address to communicate with a station that uses a second communication address, the first communication address is a communication address used by the access point, the second communication address is a communication address used by the station, and the method comprises:
sending, by the access point, first communication address change information to the station, wherein the first communication address change information is used to notify the station of a communication address which is to be used by the access point after the access point changes the communication address, the first communication address change information comprises at least a third communication address, and the third communication address is the communication address which is to be used by the access point after the access point changes the communication address;
determining, by the access point, a fourth communication address, wherein the fourth communication address is a communication address which is to be used by the station after the station changes the communication address; and
switching, by the access point, the communication address from the first communication address to the third communication address, and using the third communication address to communicate with the station whose communication address is switched from the second communication address to the fourth communication address.

2. The communication method according to claim 1, wherein the determining, by the access point, a fourth communication address specifically comprises:
generating, by the access point, the fourth communication address; or
receiving, by the access point, second communication address change information sent by the station, wherein the second communication address change information is used to notify the access point of the communication address which is to be used by the station after the station changes the communication address, and the second communication address change information comprises at least the fourth communication address.

3. The communication method according to claim 1 or 2, wherein the first communication address change information further comprises a preset time period; and
the switching, by the access point, the communication address from the first communication address to the third communication address, and using the third communication address to communicate with the station whose communication address is switched from the second communication address to the fourth communication address specifically comprises:
after the preset time period, interrupting, by the access point, communication between the first communication address and the second communication address of the station, switching the communication address from the first communication address to the third communication address, and using the third communication address to communicate with the station whose communication address is switched from the second communication address to the fourth communication address.

4. The communication method according to any one of claims 1 to 3, wherein before the sending, by the access point, first communication address change information to the station, the method further comprises:
obtaining, by the access point, the third communication address, and encrypting, by the access point, the third communication address according to an encryption algorithm, to generate the first communication address change information; or
obtaining, by the access point, the third communication address and the fourth communication address, and encrypting, by the access point, the third communication address and the fourth communication address according to an encryption algorithm, to generate the first communication address change information.

5. The communication method according to any one of claims 1 to 4, wherein before the sending, by the access point, first communication address change information to the station, the method further comprises:
receiving, by the access point, a first communication address change instruction sent by the station, wherein the first communication address change instruction is used to trigger the access point to change the communication address; and/or
sending, by the access point, a second communication address change instruction to the station, wherein the second communication address change instruction is used to trigger the station to change the communication address.

6. The communication method according to any one of claims 1 to 5, wherein the switching, by the access point, the communication address from the first communication address to the third communication address, and using the third communication address to communicate with the station whose communication address is switched from the second communication address to the fourth communication address specifically comprises:
calculating, by the access point, a first session key according to the third communication address and the fourth communication address; and
if the first session key matches a second session key, switching, by the access point, the communication address from the first communication address to the third communication address, and using the third communication address to communicate with the station whose communication address is switched from the second communication address to the fourth communication address, wherein the second session key is calculated by the station according to the third communication address and the fourth communication address.

7. A communication method, wherein an access point uses a first communication address to communicate with a station that uses a second communication address, the first communication address is a communication address used by the access point, the second communication address is a communication address used by the station, and the method comprises:
receiving, by the station, first communication address change information sent by the access point, wherein the first communication address change information is used to notify the station of a communication address which is to be used by the access point after the access point changes the communication address, the first communication address change information comprises at least a third communication address, and the third communication address is the communication address which is to be used by the access point after the access point changes the communication address;
determining, by the station, a fourth communication address, wherein the fourth communication address is a communication address which is to be used by the station after the station changes the communication address; and
switching, by the station, the communication address from the second communication address to the fourth communication address, and using the fourth communication address to communicate with the access point whose communication address is switched from the first communication address to the third communication address.

8. The communication method according to claim 7, wherein the determining, by the station, a fourth communication address specifically comprises:
obtaining, by the station, the fourth communication address according to the first communication address change information, wherein the first communication address change information further comprises the fourth communication address; or
generating, by the station, the fourth communication address.

9. The communication method according to claim 7 or 8, wherein the first communication address change information further comprises a preset time period; and
the switching, by the station, the communication address from the second communication address to the fourth communication address, and using the fourth communication address to communicate with the access point whose communication address is switched from the first communication address to the third communication address specifically comprises:
after the preset time period, interrupting, by the station, communication between the second communication address and the first communication address of the access point, switching the communication address from the second communication address to the fourth communication address, and using the fourth communication address to communicate with the access point whose communication address is switched from the first communication address to the third communication address.

10. The communication method according to any one of claims 7 to 9, wherein after the determining, by the station, a fourth communication address, the method further comprises:
encrypting, by the station, the fourth communication address according to an encryption algorithm, to generate second communication address change information, wherein the second communication address change information is used to notify the access point of the communication address which is to be used by the station after the station changes the communication address, and the second communication address change information comprises at least the fourth communication address.

11. The communication method according to any one of claims 7 to 10, wherein before the receiving, by the station, first communication address change information sent by the access point, the method further comprises:
sending, by the station, a first communication address change instruction to the access point, wherein the first communication address change instruction is used to trigger the access point to change the communication address; and/or
receiving, by the station, a second communication address change instruction sent by the access point, wherein the second communication address change instruction is used to trigger the station to change the communication address.

12. The communication method according to any one of claims 7 to 11, wherein the switching, by the station, the communication address from the second communication address to the fourth communication address, and using the fourth communication address to communicate with the access point whose communication address is switched from the first communication address to the third communication address specifically comprises:
calculating, by the station, a second session key according to the third communication address and the fourth communication address; and
if the second session key matches a first session key, switching, by the station, the communication address from the second communication address to the fourth communication address, and using the fourth communication address to communicate with the access point whose communication address is switched from the first communication address to the third communication address, wherein the first session key is calculated by the access point according to the third communication address and the fourth communication address.

13. An access point, wherein the access point uses a first communication address to communicate with a station that uses a second communication address, the first communication address is a communication address used by the access point, the second communication address is a communication address used by the station, and the access point comprises:
a sending module, configured to send first communication address change information to the station, wherein the first communication address change information is used to notify the station of a communication address which is to be used by the access point after the access point changes the communication address, the first communication address change information comprises at least a third communication address, and the third communication address is the communication address which is to be used by the access point after the access point changes the communication address;
a determining module, configured to determine a fourth communication address, wherein the fourth communication address is a communication address which is to be used by the station after the station changes the communication address;
a switching module, configured to switch the communication address from the first communication address to the third communication address; and
a communications module, configured to use the third communication address to communicate with the station whose communication address is switched from the second communication address to the fourth communication address.

14. The access point according to claim 13, wherein the determining module is specifically configured to generate the fourth communication address or is specifically configured to receive second communication address change information sent by the station, wherein the second communication address change information is used to notify the access point of the communication address which is to be used by the station after the station changes the communication address, and the second communication address change information comprises at least the fourth communication address.

15. The access point according to claim 13 or 14, wherein the first communication address change information further comprises a preset time period; and
the switching module is specifically configured to: after the preset time period, interrupt communication between the first communication address and the second communication address of the station, and switch the communication address from the first communication address to the third communication address.

16. The access point according to any one of claims 13 to 15, wherein the access point further comprises:
an obtaining module, configured to: before the sending module sends the first communication address change information to the station, obtain the third communication address or obtain the third communication address and the fourth communication address; and
an encryption module, configured to: encrypt the third communication address according to an encryption algorithm, to generate the first communication address change information; or encrypt the third communication address and the fourth communication address according to an encryption algorithm, to generate the first communication address change information.

17. The access point according to any one of claims 13 to 16, wherein the access point further comprises:
a receiving module, configured to receive, before the sending module sends the first communication address change information to the station, a first communication address change instruction sent by the station, wherein the first communication address change instruction is used to trigger the access point to change the communication address; and/or
the sending module is further configured to send a second communication address change instruction to the station before the sending module sends the first communication address change information to the station, wherein the second communication address change instruction is used to trigger the station to change the communication address.

18. The access point according to any one of claims 13 to 17, wherein the switching module specifically comprises:
a calculation submodule, configured to calculate a first session key according to the third communication address and the fourth communication address; and
an execution submodule, configured to switch the communication address from the first communication address to the third communication address if the first session key matches a second session key, wherein the second session key is calculated by the station according to the third communication address and the fourth communication address.

19. A station, wherein an access point uses a first communication address to communicate with the station that uses a second communication address, the first communication address is a communication address used by the access point, the second communication address is a communication address used by the station, and the station comprises:
a receiving module, configured to receive first communication address change information sent by the access point, wherein the first communication address change information is used to notify the station of a communication address which is to be used by the access point after the access point changes the communication address, the first communication address change information comprises at least a third communication address, and the third communication address is the communication address which is to be used by the access point after the access point changes the communication address;
a determining module, configured to determine a fourth communication address, wherein the fourth communication address is a communication address which is to be used by the station after the station changes the communication address;
a switching module, configured to switch the communication address from the second communication address to the fourth communication address; and
a communications module, configured to use the fourth communication address to communicate with the access point whose communication address is switched from the first communication address to the third communication address.

20. The station according to claim 19, wherein the determining module is specifically configured to obtain the fourth communication address according to the first communication address change information, wherein the first communication address change information further comprises the fourth communication address; or
the determining module is specifically configured to generate the fourth communication address.

21. The station according to claim 19 or 20, wherein the first communication address change information further comprises a preset time period; and
the switching module is specifically configured to: after the preset time period, interrupt communication between the second communication address and the first communication address of the access point, and switch the communication address from the second communication address to the fourth communication address.

22. The station according to any one of claims 19 to 21, wherein the station further comprises:
an encryption module, configured to: after the determining module determines the fourth communication address, encrypt the fourth communication address according to an encryption algorithm, to generate second communication address change information, wherein the second communication address change information is used to notify the access point of the communication address which is to be used by the station after the station changes the communication address, and the second communication address change information comprises at least the fourth communication address.

23. The station according to any one of claims 19 to 22, wherein the station further comprises:
a sending module, configured to send a first communication address change instruction to the access point before the receiving module receives the first communication address change information sent by the access point, wherein the first communication address change instruction is used to trigger the access point to change the communication address; and
the receiving module is further configured to receive, before the receiving module receives the first communication address change information sent by the access point, a second communication address change instruction sent by the access point, wherein the second communication address change instruction is used to trigger the station to change the communication address.

24. The station according to any one of claims 19 to 23, wherein the switching module specifically comprises:
a calculation submodule, configured to calculate a second session key according to the third communication address and the fourth communication address; and
an execution submodule, configured to switch the communication address from the second communication address to the fourth communication address if the second session key matches a first session key, wherein the first session key is calculated by the access point according to the third communication address and the fourth communication address.

25. A communications system, comprising the access point according to any one of claims 13 to 18, and at least one station according to any one of claims 19 to 24.
